# EUROPEAN PATENT APPLICATION

(11) **EP 4 567 141 A1**
(43) Date of publication of application: **11.06.2025**
(21) Application number: 23849910.7
(22) Date of filing: 20.07.2023
(51) Int. Cl.: C22B 11/00, C22B 3/06, C22B 3/24, C22B 7/00

(54) **NOBLE METAL RECOVERY KIT, RECOVERY METHOD, AND RECOVERY DEVICE**

(30) Priority: 01.08.2022 JP 2022122630
(71) Applicant: Daicel Corporation, Osaka-shi, Osaka 530-0011 (JP)
(72) Inventor: SAKATA, Yumi, Tokyo 108-8230 (JP)
(74) Representative: Grünecker Patent- und Rechtsanwälte PartG mbB
(86) International application number: PCT/JP2023/026575
(87) International publication number: WO 2024/029355

(57) **Abstract**

To provide a noble metal recovery kit that can recover a highly pure noble metal from a metal secondary resource in an energy-saving and simple manner. The noble metal recovery kit of the present disclosure is a kit for recovering a noble metal (M), and includes a noble metal dissolving liquid, a diluent, and an adsorbent material described below. The noble metal dissolving liquid contains hydrochloric acid and nitric acid and has a ratio of hydrochloric acid/nitric acid (molar ratio) of 2 to 6. The diluent is a liquid for diluting a noble metal solution obtained by dissolving a noble metal (M) in the noble metal dissolving liquid and is a solution for adjusting a nitric acid concentration in the noble metal solution to be equal to or greater than 10 times by mole a noble metal ion (Mⁿ⁺) concentration in the noble metal solution and to be less than 1.5 mol/L. The adsorbent material is a member having a property of adsorbing the noble metal ion (Mⁿ⁺).

## Description

### Technical Field

The present disclosure relates to a noble metal recovery kit, a noble metal recovery method, and a noble metal recovery device. The present disclosure claims priority to JP 2022-122630 filed in Japan on August 1, 2022, the content of which is incorporated herein by reference.

### Background Art

Noble metals such as gold, platinum, and palladium are very expensive, but are significantly important substances in cutting-edge fields, such as electronic components, semiconductors, catalysts necessary for purification of exhaust gas of automobiles, liquid crystal glass, and LEDs.

Electrical and electronic waste (e-waste) contains a large amount of noble metals and, in some cases, may contain noble metals in an amount equal to or greater than 10 times the amount of noble metals contained in ores. Thus, the electrical and electronic waste is referred to as a metal secondary resource. Accordingly, a demand has arisen for separation and recovery of noble metals from such a metal secondary resource in an inexpensive and simple manner for reuse of the noble metals.

Patent Document 1 describes that a gold-containing organic phase can be produced by the following process: a metal secondary resource is dissolved in aqua regia to prepare a gold ion solution, and the prepared gold ion solution is subjected to an extraction treatment with dibutyl carbitol. The patent document also describes that when a nitrate ion is present in the gold ion solution, a nitrate of a metal other than gold, such as tin, platinum, or palladium is likely to be mixed into the gold-containing organic phase, resulting in low purity of the recovered gold, and thus the gold ion solution preferably contains no nitrate ion. However, removal of a nitrate ion requires an operation such as repeated concentration, and poses a problem that a lot of effort and a large amount of thermal energy are required.

### Citation List

### Patent Document

Patent Document 1: JP 2011-132552 A

### Summary of Invention

### Technical Problem

Thus, an object of the present disclosure is to provide a noble metal recovery kit that can recover a highly pure noble metal from a metal secondary resource in an energy-saving and simple manner.

Another object of the present disclosure is to provide a noble metal recovery method that can recover a highly pure noble metal from a metal secondary resource in an energy-saving and simple manner.

Another object of the present disclosure is to provide a noble metal recovery device that can recover a highly pure noble metal from a metal secondary resource in an energy-saving and simple manner.

### Solution to Problem

As a result of diligent research to solve the problems described above, the present inventor has found that, in a noble metal solution containing a noble metal ion (Mⁿ⁺) prepared by dissolving a noble metal in a noble metal dissolving liquid such as aqua regia, when the nitric acid concentration of the solution is adjusted to fall within a specific range, and an adsorbent material having a property of adsorbing the noble metal ion (Mⁿ⁺) is added to the solution after the adjustment, the noble metal ion (Mⁿ⁺) can be efficiently adsorbed to the adsorbent material while deterioration of the function of the adsorbent material by nitric acid is prevented. The present inventor has also found that in a case where a noble metal that is a recovery target and a metal that is not a recovery target (hereinafter may be referred to as "other metal") coexist in a system, the other metal forms a nitrate salt and dissolves in the solution; however, when an adsorbent material having a property of adsorbing the noble metal ion (Mⁿ⁺) but not adsorbing the other metal ion is selected and used, and the adsorbent material to which the noble metal ion (Mⁿ⁺) is adsorbed is separated from the solution by separation means such as filtration, the other metal can be easily separated and removed, and thus a highly pure noble metal (M) can be obtained by separating the adsorbent material to which the noble metal ion (Mⁿ⁺) is adsorbed from the solution and then subjecting the separated adsorbent material to reduction, firing, or a like treatment. The present disclosure has been completed based on these findings.

Accordingly, the present disclosure provides a noble metal recovery kit for recovering a noble metal (M), the noble metal recovery kit including a noble metal dissolving liquid, a diluent, and an adsorbent material described below:
the noble metal dissolving liquid containing hydrochloric acid and nitric acid and having a ratio of hydrochloric acid/nitric acid (molar ratio) of 2 to 6;
the diluent being a liquid for diluting a noble metal solution obtained by dissolving a noble metal (M) in the noble metal dissolving liquid and being a solution for adjusting a nitric acid concentration in the noble metal solution to be equal to or greater than 10 times by mole a noble metal ion (Mⁿ⁺) concentration in the noble metal solution and to be less than 1.5 mol/L; and
the adsorbent material being a member having a property of adsorbing the noble metal ion (Mⁿ⁺).

The present disclosure also provides the noble metal recovery kit, wherein the noble metal dissolving liquid is aqua regia.

The present disclosure also provides the noble metal recovery kit, wherein the adsorbent material is an ester having a sugar skeleton.

The present disclosure also provides the noble metal recovery kit, wherein the adsorbent material is a polysaccharide acylate.

The present disclosure also provides the noble metal recovery kit, wherein the adsorbent material is a separation membrane, material for filling in column, or material for filling in cartridge including a member having a property of adsorbing the noble metal ion (Mⁿ⁺).

The present disclosure also provides the noble metal recovery kit, wherein the noble metal recovery kit recovers a noble metal (M) from a metal secondary resource containing the noble metal (M).

The present disclosure also provides a noble metal recovery method including allowing a noble metal ion (Mⁿ⁺) to be adsorbed to a member having a property of adsorbing the noble metal ion (Mⁿ⁺) by bringing the member into contact with a solution containing the noble metal ion (Mⁿ⁺) and nitric acid and having a nitric acid concentration of equal to or greater than 10 times by mole a concentration of the noble metal ion (Mⁿ⁺) and of less than 1.5 mol/L.

The present disclosure also provides a noble metal recovery device including a unit for allowing a noble metal ion (Mⁿ⁺) to be adsorbed to a member having a property of adsorbing the noble metal ion (Mⁿ⁺) by bringing the member into contact with a solution containing the noble metal ion (Mⁿ⁺) and nitric acid and having a nitric acid concentration of equal to or greater than 10 times by mole a concentration of the noble metal ion (Mⁿ⁺) and of less than 1.5 mol/L.

### Advantageous Effects of Invention

When the noble metal recovery kit of the present disclosure is used, a highly pure noble metal (M) can be recovered from a metal secondary resource by a simple method in an energy-saving manner without use of means requiring a large amount of thermal energy. That is, the noble metal recovery kit has an effect of promoting reuse of valuable resources while reducing environmental load.

When the noble metal recovery method or noble metal recovery device of the present disclosure is used, a highly pure noble metal (M) can be recovered from a metal secondary resource in a simple and energy-saving manner without use of means requiring a large amount of thermal energy. That is, the noble metal recovery method or the noble metal recovery device has an effect of promoting reuse of valuable resources while reducing environmental load.

### Brief Description of Drawings

FIG. 1 is a schematic flow chart illustrating one example of the noble metal recovery method of the present disclosure.
FIG. 2 is a schematic flow chart illustrating another example of the noble metal recovery method of the present disclosure.

### Description of Embodiments

### [Noble Metal Recovery Kit]

The noble metal recovery kit according to an embodiment of the present disclosure is a set of materials for recovering a predetermined noble metal (M) and includes a noble metal dissolving liquid (1), a diluent (2), and an adsorbent material (3) described below. The kit may include, besides these components, an additional component as necessary.

The noble metal dissolving liquid (1) contains hydrochloric acid and nitric acid and has a ratio of hydrochloric acid/nitric acid (molar ratio) of 2 to 6.

The diluent (2) is a liquid for diluting a noble metal solution obtained by dissolving a noble metal (M) in the noble metal dissolving liquid and is a solution for adjusting the nitric acid concentration in the noble metal solution to be equal to or greater than 10 times by mole the concentration of a noble metal ion (Mⁿ⁺) in the noble metal solution and to be less than 1.5 mol/L.

The adsorbent material (3) is a member having a property of adsorbing the noble metal ion (Mⁿ⁺).

The noble metal (M) in the present disclosure includes a zero-valent noble metal atom and an aggregate of the zero-valent noble metal atoms. Furthermore, the zero-valent noble metal atoms may be dispersed in a solution to form a colloid.

The noble metal (M) is, for example, one type or two or more types of noble metals selected from gold, silver, platinum, copper, iridium, and palladium. The noble metal (M) dissolves to form an n-valent noble metal ion (Mⁿ⁺). The above-described n is an integer of 1 or more, and is preferably an integer of 1 to 4.

The use of the noble metal recovery kit enables recovery of a noble metal (M) (in particular, gold) contained in a metal secondary resource such as electric and electronic waste (e-waste) in an energy-saving, simple, and efficient manner.

The noble metal recovery kit is preferably used as a kit for recovering a noble metal (M) contained in a metal secondary resource and particularly preferably used as a kit for recovering gold contained in a metal secondary resource.

### (Noble Metal Dissolving Liquid (1))

The noble metal dissolving liquid is a solution having a function to dissolve a noble metal and contains at least hydrochloric acid and nitric acid.

The molar ratio of hydrochloric acid to nitric acid (hydrochloric acid/nitric acid) contained in the noble metal dissolving liquid is from 2 to 6. In particular, from the viewpoint of achieving excellent solubility of a noble metal, the upper limit of the molar ratio is preferably 5, more preferably 4.5, particularly preferably 4, most preferably 3.5, and especially preferably 3. The lower limit of the molar ratio is preferably 2.5, and particularly preferably 3.

The concentrations of hydrochloric acid and nitric acid contained in the noble metal dissolving liquid are only required to be equal to or greater than the concentrations that enable generation of nitrosyl chloride (NOCl) and chlorine (Cl₂) exhibiting an action of oxidizing of the noble metal.

The noble metal dissolving liquid is particularly preferably aqua regia. The aqua regia is a mixed liquid of concentrated hydrochloric acid and concentrated nitric acid, and the molar ratio of hydrochloric acid and nitric acid (hydrochloric acid/nitric acid) is 3.

In the noble metal recovery kit according to an embodiment of the present disclosure, the noble metal (M) is dissolved by using the noble metal dissolving liquid. The solution obtained as described above is referred to as "noble metal solution" in the present specification.

The nitric acid concentration in the noble metal solution (noble metal solution before addition of the diluent (2)) is, for example, equal to or greater than 60 times by mole the noble metal ion (Mⁿ⁺) concentration. From the viewpoint of excellent solubility of the noble metal (M), the nitric acid concentration is preferably 600 to 600000 times by mole, and particularly preferably 6000 to 60000 times by mole the noble metal ion concentration.

The hydrochloric acid concentration in the noble metal solution (noble metal solution before addition of the diluent (2)) is, for example, equal to or greater than 180 times by mole the noble metal ion (Mⁿ⁺) concentration. From the viewpoint of excellent solubility of the noble metal (M), the hydrochloric acid concentration is preferably 1800 to 1800000 times by mole, and particularly preferably 18000 to 180000 times by mole the noble metal ion concentration.

### (Diluent (2))

The diluent is a solution for diluting the noble metal solution obtained by dissolving the noble metal (M) in the noble metal dissolving liquid (or solution for adjusting the nitric acid concentration (preferably the nitric acid concentration and the hydrochloric acid concentration) of the noble metal solution) and is a solution for adjusting the nitric acid concentration in the noble metal solution to be equal to or greater than 10 times by mole the noble metal ion (Mⁿ⁺) concentration in the noble metal solution and to be less than 1.5 mol/L by addition of the diluent to the noble metal solution.

Examples of the diluent include a solution containing at least one selected from water, hydrochloric acid, and nitric acid. The solution obtained by adding the diluent to the noble metal solution [solution in which the nitric acid concentration (preferably the nitric acid concentration and the hydrochloric acid concentration) is adjusted] is a solution containing the noble metal dissolving liquid, the noble metal ion (Mⁿ⁺), and the diluent and is referred to as "acidic metal solution" in the present specification.

In a case where the diluent contains two or more types of solutions, the two or more types of solutions may be mixed, or may be stored without being mixed until use and mixed at the time of use.

In a case where the diluent contains two or more types of solutions, the mixing ratio of the two or more types of solutions can be set to an appropriate blending ratio depending on the noble metal ion (Mⁿ⁺) concentration in the noble metal solution or the like.

The composition and the addition amount of the diluent are a composition and an amount such that the nitric acid concentration and the hydrochloric acid concentration in a system after addition of the diluent to the noble metal solution, i.e., the nitric acid concentration and the hydrochloric acid concentration in the acidic metal solution fall within the following ranges.

The nitric acid concentration in the acidic metal solution is equal to or greater than 10 times by mole the concentration of the noble metal ion (Mⁿ⁺), which is the recovery target. From the viewpoint of improving the purity of the noble metal (M) to be recovered, the nitric acid concentration is preferably equal to or greater than 50 times by mole, more preferably equal to or greater than 60 times by mole, even more preferably equal to or greater than 100 times by mole, even more preferably equal to or greater than 200 times by mole, even more preferably equal to or greater than 300 times by mole, even more preferably equal to or greater than 400 times by mole, even more preferably equal to or greater than 450 times by mole, even more preferably equal to or greater than 600 times by mole, particularly preferably equal to or greater than 1000 times by mole, most preferably equal to or greater than 2000 times by mole, and especially preferably equal to or greater than 3000 times by mole the noble metal ion concentration.

The nitric acid concentration in the acidic metal solution is preferably equal to or less than 20000 times by mole the concentration of the noble metal ion (Mⁿ⁺), which is the recovery target. From the viewpoint of durability of the adsorbent material, the nitric acid concentration is more preferably equal to or less than 12000 times by mole, more preferably equal to or less than 10000 times by mole, even more preferably equal to or less than 8000 times by mole, particularly preferably equal to or less than 6000 times by mole, and most preferably equal to or less than 5000 times by mole the noble metal ion concentration.

The nitric acid concentration in the acidic metal solution is less than 1.5 mol/L. From the viewpoint of durability of the adsorbent material, the nitric acid concentration is preferably 1.4 mol/L or less, more preferably 1.2 mol/L or less, even more preferably 1 mol/L or less, even more preferably 0.8 mol/L or less, particularly preferably 0.6 mol/L or less, most preferably 0.5 mol/L or less, and especially preferably 0.4 mol/L or less. From the viewpoint of improving the purity of the noble metal (M) to be recovered, the nitric acid concentration is preferably 0.001 mol/L or greater, more preferably 0.01 mol/L or greater, particularly preferably 0.05 mol/L or greater, most preferably 0.1 mol/L or greater, and especially preferably 0.2 mol/L or greater.

The nitric acid concentration in the acidic metal solution is, for example, from 0.001 to 8 wt.%. From the viewpoint of improving recovery efficiency of the noble metal, the lower limit of the nitric acid concentration is preferably 0.03 wt.%, more preferably 0.05 wt.%, even more preferably 0.1 wt.%, even more preferably 0.2 wt.%, even more preferably 0.3 wt.%, even more preferably 0.5 wt.%, particularly preferably 0.7 wt.%, most preferably 1 wt.%, and especially preferably 1.5 wt.%. From the viewpoint of improving recovery efficiency of the noble metal, the upper limit of the nitric acid concentration is preferably 5 wt.%, particularly preferably 3 wt.%, and most preferably 2.5 wt.%.

From the viewpoints of improving adsorptive interaction and improving the amount of adsorption, the hydrochloric acid concentration in the acidic metal solution is preferably equal to or greater than 30 times by mole, more preferably equal to or greater than 100 times by mole, even more preferably equal to or greater than 150 times by mole, even more preferably equal to or greater than 180 times by mole, even more preferably equal to or greater than 200 times by mole, even more preferably equal to or greater than 300 times by mole, even more preferably equal to or greater than 500 times by mole, even more preferably equal to or greater than 800 times by mole, even more preferably equal to or greater than 1000 times by mole, even more preferably equal to or greater than 1200 times by mole, even more preferably equal to or greater than 1800 times by mole, even more preferably equal to or greater than 2000 times by mole, even more preferably equal to or greater than 3000 times by mole, even more preferably equal to or greater than 4000 times by mole, even more preferably equal to or greater than 5000 times by mole, even more preferably equal to or greater than 8000 times by mole, and even more preferably equal to or greater than 10000 times by mole the concentration of the noble metal ion (Mⁿ⁺), which is the recovery target.

From the viewpoint of durability of the adsorbent material, the hydrochloric acid concentration in the acidic metal solution is preferably equal to or less than 60000 times by mole, more preferably equal to or less than 50000 times by mole, even more preferably equal to or less than 40000 times by mole, particularly preferably equal to or less than 30000 times by mole, most preferably equal to or less than 20000 times by mole, and especially preferably equal to or less than 15000 times by mole the concentration of the noble metal ion (Mⁿ⁺), which is the recovery target.

From the viewpoints of improving adsorptive interaction and improving the amount of adsorption, the hydrochloric acid concentration in the acidic metal solution is preferably 0.001 mol/L or greater, more preferably 0.01 mol/L or greater, even more preferably 0.1 mol/L or greater, particularly preferably 0.3 mol/L or greater, most preferably 0.5 mol/L or greater, and especially preferably 0.8 mol/L or greater.

From the viewpoint of durability of the adsorbent material, the hydrochloric acid concentration in the acidic metal solution is preferably 6 mol/L or less, more preferably 5 mol/L or less, even more preferably 4 mol/L or less, even more preferably 3 mol/L or less, particularly preferably 2.5 mol/L or less, most preferably 2.0 mol/L or less, and especially preferably 1.5 mol/L or less.

The hydrochloric acid concentration in the acidic metal solution is, for example, from 0.001 to 13 wt.%. From the viewpoint of improving recovery efficiency of the noble metal, the lower limit of the hydrochloric acid concentration is preferably 0.05 wt.%, more preferably 0.1 wt.%, even more preferably 0.5 wt.%, even more preferably 1 wt.%, particularly preferably 2 wt.%, most preferably 2.5 wt.%, and especially preferably 3.0 wt.%. From the viewpoint of improving durability of the adsorbent material, the upper limit of the hydrochloric acid concentration is preferably 9 wt.%, more preferably 7 wt.%, even more preferably 5 wt.%, particularly preferably 4 wt.%, and most preferably 3.5 wt.%.

### (Adsorbent material (3))

The adsorbent material is a member having a property of adsorbing a noble metal ion (Mⁿ⁺). When the adsorbent material is brought into contact with an acidic metal solution, the adsorbent material adsorbs a noble metal ion (Mⁿ⁺) in the acidic metal solution.

Preferably, the adsorbent material selectively adsorbs the noble metal ion (Mⁿ⁺), which is the recovery target. In a case where a metal ion other than the recovery target is also contained in the acidic metal solution, the power to adsorb the noble metal ion (Mⁿ⁺), which is the recovery target, of the member to be used is preferably equal to or greater than 10 times (more preferably equal to or greater than 30 times, particularly preferably equal to or greater than 50 times, and most preferably equal to or greater than 100 times) the power to adsorb a metal ion that is not the recovery target. Particularly preferably, a member having a property of not adsorbing a metal ion other than the recovery target is selected and used.

In a case where the recovery target is a gold ion (Au⁺ and/or Au³⁺), the adsorbent material to be used is preferably an ester having a sugar skeleton (compound having a sugar skeleton wherein at least one of hydroxy groups of the compound is esterified; hereinafter, also referred to as "sugar ester").

The sugar ester is preferably a polysaccharide ester.

The polysaccharide is a compound obtained by polymerization of one type or two or more types of monosaccharides by glycosidic bonding. Examples of the monosaccharide include glucose, mannose, xylose, galactose, N-acetylglucosamine, N-acetylgalactosamine, and fucose.

Examples of the polysaccharide include cellulose, amylose, amylopectin, dextran, hemicellulose, chitin, glycogen, agarose, and pectin.

In particular, the polysaccharide is preferably a polysaccharide having a low solubility in the acidic metal solution, from the viewpoint of ease in fractionation by filtration or the like after adsorption of the noble metal ion.

In particular, the polysaccharide is a (homo)polymer of glucose, such as cellulose, amylose, or dextran, more specifically, a compound obtained by polymerizing only glucose (especially, α-glucose or β-glucose) by glycosidic bonding, and is preferably a compound represented by a molecular formula [(C₆H₁₀O₅)ₙ] (in the formula, n represents the number of repeated glucose units and is an integer of 2 or more).

The polysaccharide ester includes a compound formed by condensation reaction between one or two or more of the hydroxy groups contained in the polysaccharide and at least one type of oxoacid selected from carboxylic acid, sulfuric acid, hydroxy acid, or phosphoric acid.

In particular, the polysaccharide ester is preferably a polysaccharide acylate, which is a condensation product of a polysaccharide and carboxylic acid, from the viewpoint of especially excellent power to adsorb the noble metal ion (especially, gold ion) and from the viewpoints of low solubility in the acidic metal solution and excellent handling due to suppression of swelling in the acidic metal solution.

The polysaccharide acylate is a compound in which at least some of hydroxy groups in a compound represented by the molecular formula [(C₆H₁₀O₅)ₙ] are esterified with acyl groups ((RC(=O) groups). That is, the polysaccharide acylate is a compound in which at least some of hydroxy groups (-OH groups) in a compound represented by the molecular formula [(C₆H₁₀O₅)ₙ] are substituted with -OC(=O)R groups.

R in the RC(=O) group is a hydrocarbon group. The hydrocarbon group includes aliphatic hydrocarbon groups, alicyclic hydrocarbon groups, aromatic hydrocarbon groups, and groups formed by bonding of these groups.

The aliphatic hydrocarbon group includes a saturated aliphatic hydrocarbon group and an unsaturated aliphatic hydrocarbon group.

The saturated aliphatic hydrocarbon group is preferably a saturated aliphatic hydrocarbon group having from 1 to 10 carbons, and particularly preferably a saturated aliphatic hydrocarbon group having from 1 to 6 carbons. Examples of the saturated aliphatic hydrocarbon group include linear or branched alkyl groups, such as a methyl group, an ethyl group, a propyl group, an isopropyl group, a butyl group, an isobutyl group, an s-butyl group, a t-butyl group, a pentyl group, a hexyl group, a heptyl group, an octyl group, a 2-ethylhexyl group, and a decyl group.

The unsaturated aliphatic hydrocarbon group is preferably an unsaturated aliphatic hydrocarbon group having from 2 to 10 carbons, and particularly preferably an unsaturated aliphatic hydrocarbon group having from 2 to 6 carbons. Examples of the unsaturated aliphatic hydrocarbon group include linear or branched alkenyl groups, such as a vinyl group and an allyl group; and alkynyl groups, such as an ethynyl group and a propynyl group.

The alicyclic hydrocarbon group is preferably an alicyclic hydrocarbon group having from 3 to 10 carbons, and examples thereof include cycloalkyl groups, such as a cyclopropyl group and a cyclohexyl group.

The aromatic hydrocarbon group is preferably an aromatic hydrocarbon group having from 6 to 14 carbons, and examples thereof include a phenyl group and a naphthyl group.

In the polysaccharide acylate, some of hydroxy groups (-OH groups) in a compound represented by the molecular formula [(C₆H₁₀O₅)ₙ] are substituted with - OR groups. The aforementioned R is a hydrocarbon group, and examples thereof include the same as those described for R in the acyl group (RC(=O) group).

The polysaccharide acylate is particularly preferably a cellulose acylate having a repeating unit represented by Formula (1) below or an amylose acylate having a repeating unit represented by Formula (2) below. In Formulae (1) and (2) below, Xs are the same or different and each represent an acyl group (RC(=O) group: R is the same as described above), a hydrocarbon group (R group: R is the same as described above), or a hydrogen atom. At least one of Xs is an acyl group.

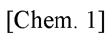

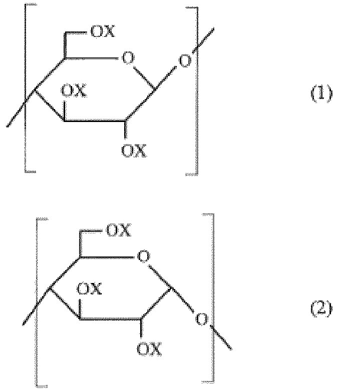

Examples of the cellulose acylate include cellulose acetate, cellulose propionate, cellulose butyrate, cellulose acetate propionate, and cellulose acetate butyrate.

Examples of the amylose acylate include amylose acetate, amylose propionate, and amylose butyrate.

The sugar ester is preferably at least one selected from the group consisting of cellulose acylate and amylose acylate, and is more preferably cellulose acylate. The cellulose acylate is preferably at least one selected from the group consisting of cellulose acetate, cellulose propionate, cellulose butyrate, cellulose acetate propionate, and cellulose acetate butyrate, and is particularly preferably a compound that is represented by Formula (1) above and has a repeating unit in which at least one of three Xs in the formula is an acetyl group, such as cellulose acetate, cellulose acetate propionate, or cellulose acetate butyrate. Cellulose acetate is particularly preferred.

Regarding the component, one type of sugar ester may be used alone, or two or more types of sugar esters may be used in combination.

The total degree of ester group substitution of the sugar ester (or total degree of acyl group substitution of polysaccharide acylate) is, for example, from 1.0 to 3.0, preferably from 1.5 to 3.0, more preferably from 2.0 to 3.0, and particularly preferably from 2.2 to 2.7. Because the sugar ester (or polysaccharide acylate) having the above-described degree of substitution adsorbs a gold ion by excellent adsorptive power, the gold ion can be efficiently adsorbed and recovered when the sugar ester is brought into contact with an acidic metal solution containing the gold ion.

For the cellulose acetate among the sugar esters, the total degree of acetyl group substitution can be determined in accordance with the method of Tezuka (Tezuka, Carbonydr. Res. 273, 83 (1995)) described below.
1. An unsubstituted hydroxyl group of a cellulose acetate sample is propionylated with propionic anhydride in pyridine.
2. The resulting sample is dissolved in deuterated chloroform, and the ¹³C-NMR spectrum is measured.
3. The carbon signals of the acetyl group appear in a region from 169 ppm to 171 ppm in the order of 2-, 3-, and 6-positions from the high magnetic field, and the carbonyl carbon signals of the propionyl group appear in a region from 172 ppm to 174 ppm in the same order. Each of the degrees of acetyl substitution at the 2-, 3-, and 6-positions of the glucose ring in the original cellulose acetate can be determined from the presence ratio of the acetyl group to the propionyl group at the respective corresponding positions.

The weight average molecular weight (Mw) of the sugar ester (or polysaccharide acylate) is, for example, from 50000 to 1000000, preferably from 70000 to 1000000, more preferably from 100000 to 1000000, even more preferably from 100000 to 500000, and particularly preferably from 100000 to 300000.

The degree of dispersion (molecular weight distribution obtained by dividing weight average molecular weight (Mw) by number average molecular weight (Mn): Mw/Mn) of the sugar ester (or polysaccharide acylate) is, for example, from 2 to 10, preferably from 2 to 8, and particularly preferably from 2 to 5.

The number average molecular weight (Mn), the weight average molecular weight (Mw), and the degree of dispersion (Mw/Mn) of the sugar ester (or polysaccharide acylate) can be determined by a known method using gel permeation chromatography.

The form of the sugar ester (or polysaccharide acylate) is not particularly limited. From the viewpoint of excellent adsorptivity to a gold ion, the sugar ester is preferably in a powdery form or a spherical form (e.g., an average particle size of approximately from 0.5 to 1 µm) or a fiber form [in particular, a fiber form having a single yarn fineness obtained by dry spinning such as electrospinning of, for example, from 0.05 to 10 denier (preferably from 0.5 to 5.0 denier, and particularly preferably from 0.5 to 1.0 denier) and a total fineness of, for example, from 600 to 60000 denier (particularly preferably from 3000 to 30000 denier)].

Regarding the form, one type of sugar ester may be used alone, or two or more types of sugar esters may be used in combination.

The usage of the adsorbent material is not particularly limited, and examples thereof include a separation membrane (or a filtration membrane), a material for filling in column, and a material for filling in cartridge. That is, the adsorbent material may be a separation membrane (or filtration membrane), material for filling in column, or material for filling in cartridge including a member having a property of adsorbing the noble metal ion (Mⁿ⁺).

Examples of the method of using the adsorbent material as a separation membrane include a method in which woven fabric or nonwoven fabric is formed by using the adsorbent material in a fiber form and is used as a separation membrane, and a method in which the adsorbent material is attached to a surface of a separation membrane formed by a component other than the adsorbent material and used.

Examples of the method of using the adsorbent material as a material for filling in column or a material for filling in cartridge include a method in which the adsorbent material in a powdery form or spherical form, a pellet-like adsorbent material obtained by cutting the adsorbent material in a fiber form, or a material obtained by attaching the adsorbent material onto the surface of a particle, powder, or fiber formed of a component other than the adsorbent material is used as a material for filling in column or a material for filling in cartridge. The material for filling in column is used by being charged in a column container. The material for filling in cartridge is used by being charged in a cartridge.

Thus, the noble metal recovery kit may include a noble metal dissolving liquid, a diluent, and at least one selected from a separation membrane made of an adsorbent material having a property of adsorbing the noble metal ion (Mⁿ⁺), a separation membrane including the adsorbent material, a material for filling in column or material for filling in cartridge made of the adsorbent material, a material for filling in column or material for filling in cartridge including the adsorbent material, or a column or cartridge charged with the filler.

After the noble metal ion (Mⁿ⁺) is adsorbed to the adsorbent material using the noble metal recovery kit, when the noble metal ion (Mⁿ⁺)-adsorbed adsorbent material is subjected to a reduction treatment, a firing treatment, or the like, a highly pure noble metal (M) can be easily recovered.

Examples of the reduction treatment include a method in which the noble metal ion (Mⁿ⁺) adsorbed to the adsorbent material is reduced by bringing the adsorbent material into contact with the reducing agent described below, to detach the noble metal ion (Mⁿ⁺) and precipitate the noble metal (M). This treatment method enables detachment and recovery of the noble metal (M) at low cost and low energy.

### (Reducing Agent)

Examples of the reducing agent include a compound containing at least one group selected from a hydroxy group, a thiol group, a carboxyl group, and a nitrogen atom-containing group. One type of these reducing agents can be used alone, or two or more types of the reducing agents can be used in combination.

Examples of the hydroxy group-containing compound include alcohols such as 1,4-butanediol, glycerol, and polyethylene glycol; phenols such as hydroquinone; monosaccharides such as glucose; and polysaccharides such as cellulose, carboxymethyl cellulose, cyclodextrin, chitin, and chitosan.

Examples of the thiol group-containing compound include benzenethiol, methanethiol, ethanethiol, propanethiol, cysteine, 2-mercaptoethanol, and thioglycerol.

Examples of the carboxyl group-containing compound include monocarboxylic acids such as formic acid, acetic acid, propionic acid, and butyric acid; polycarboxylic acids such as oxalic acid, malonic acid, and succinic acid; hydroxymonocarboxylic acids such as lactic acid and glycolic acid; hydroxypolycarboxylic acids such as citric acid and tartaric acid; aminocarboxylic acids such as N,N-dimethylaminoacetic acid and N,N-dimethylaminopropionic acid; and lactones such as ascorbic acid.

Examples of the compound containing the nitrogen atom-containing group include amines such as methylamine, ethylamine, propylamine, monoethanolamine, dimethylamine, diethylamine, N-methylethanolamine, diethanolamine, dimethylethylamine, N-methyldiethanolamine, and N,N-dimethylethanolamine; and amides such as acetamide, propionamide, N-methylformamide, N-methylacetamide, N-methylpropionamide, N,N-dimethylformamide, and N,N-dimethylacetamide.

Examples of the reducing agent also include aldehydes such as formaldehyde and acetaldehyde.

In particular, the reducing agent is preferably a compound having two or more groups selected from a hydroxy group, a thiol group, a carboxyl group, or a nitrogen atom-containing group per molecule, and is particularly preferably a compound having three or more groups selected from a hydroxy group, a thiol group, a carboxyl group, or a nitrogen atom-containing group per molecule, from the viewpoints of having ligating property to a noble metal ion (Mⁿ⁺), and being capable of forming a complex by ligating the noble metal ion (Mⁿ⁺) adsorbed to the adsorbent material, and forming a noble metal (M) having excellent stability by reducing the noble metal ion (Mⁿ⁺).

In particular, the reducing agent is preferably a compound that adjusts the pH of a reaction system with which the adsorbent material is brought into contact to 10 or lower (preferably a pH of 10 to 2, and more preferably a pH of 9 to 3) from the viewpoint of pulverizing the noble metal ion (Mⁿ⁺) adsorbed to the adsorbent material while decomposition of the adsorbent material is suppressed, and is preferably a compound containing a hydroxy group and/or a carboxyl group.

The reducing agent is particularly preferably hydroxycarboxylic acid, and is especially preferably hydroxypolycarboxylic acid.

### [Noble Metal Recovery Method]

The noble metal recovery method includes a step of allowing a noble metal ion (Mⁿ⁺) to be adsorbed to a member having a property of adsorbing the noble metal ion (Mⁿ⁺) by bringing the member into contact with a solution containing the noble metal ion (Mⁿ⁺) and nitric acid and having a nitric acid concentration of equal to or greater than 10 times by mole the concentration of the noble metal ion (Mⁿ⁺) and of less than 1.5 mol/L.

The above-described step preferably includes a dissolution step of dissolving a noble metal in a noble metal dissolving liquid (1); a nitric acid concentration adjustment step of adding a diluent (2) to a solution obtained by dissolving the noble metal in the noble metal dissolving liquid (1) (= noble metal solution) to adjust the nitric acid concentration in the noble metal solution to prepare an acidic metal solution; and an adsorption step of allowing the noble metal ion in the acidic metal solution to be adsorbed to an adsorbent material (3) by bringing the adsorbent material (3) into contact with the acidic metal solution.

The above-described steps can be carried out by any method, such as a batch method, a semi-batch method, or a continuous method.

### (Dissolution Step)

The dissolution step involves dissolving the noble metal (M) in the noble metal dissolving liquid (1) and is performed by, for example, a method in which the noble metal (M) is immersed in the noble metal dissolving liquid (1) and stirred at a temperature of 25 to 100°C for approximately 1 to 100 hours. The amount of the noble metal dissolving liquid (1) used is, for example, from 1000 to 100000 parts by weight, and preferably from 1000 to 10000 parts by weight, relative to 1 part by weight of the noble metal (M). When the noble metal dissolving liquid (1) is used in the range described above, a noble metal (M) or a metal secondary resource containing the noble metal (M) can be dissolved therein, to prepare a noble metal solution containing the noble metal ion (Mⁿ⁺).

### (Nitric Acid Concentration Adjustment Step)

The nitric acid concentration adjustment step involves adjusting the nitric acid concentration in the solution by adding a diluent (2) to the noble metal solution prepared by the step described above. Through this step, an acidic metal solution having the adjusted nitric acid concentration is obtained.

The amount of the diluent added is such an amount that the nitric acid concentration and the hydrochloric acid concentration in a system after addition of the diluent to the noble metal solution, i.e., the nitric acid concentration and the hydrochloric acid concentration in the acidic metal solution fall within the following ranges.

The nitric acid concentration in the acidic metal solution is equal to or greater than 10 times by mole the concentration of the noble metal ion (Mⁿ⁺), which is the recovery target. From the viewpoint of improving the purity of the noble metal (M) to be recovered, the nitric acid concentration is preferably equal to or greater than 50 times by mole, more preferably equal to or greater than 60 times by mole, even more preferably equal to or greater than 100 times by mole, even more preferably equal to or greater than 200 times by mole, even more preferably equal to or greater than 300 times by mole, even more preferably equal to or greater than 400 times by mole, even more preferably equal to or greater than 450 times by mole, even more preferably equal to or greater than 600 times by mole, particularly preferably equal to or greater than 1000 times by mole, most preferably equal to or greater than 2000 times by mole, and especially preferably equal to or greater than 3000 times by mole the noble metal ion concentration.

The nitric acid concentration in the acidic metal solution is preferably equal to or less than 20000 times by mole the concentration of the noble metal ion (Mⁿ⁺), which is the recovery target. From the viewpoint of durability of the adsorbent material, the nitric acid concentration is more preferably equal to or less than 12000 times by mole, more preferably equal to or less than 10000 times by mole, even more preferably equal to or less than 8000 times by mole, particularly preferably equal to or less than 6000 times by mole, and most preferably equal to or less than 5000 times by mole the noble metal ion concentration.

The nitric acid concentration in the acidic metal solution is less than 1.5 mol/L. From the viewpoint of durability of the adsorbent material, the nitric acid concentration is preferably 1.4 mol/L or less, more preferably 1.2 mol/L or less, even more preferably 1 mol/L or less, even more preferably 0.8 mol/L or less, particularly preferably 0.6 mol/L or less, most preferably 0.5 mol/L or less, and especially preferably 0.4 mol/L or less. From the viewpoint of improving the purity of the noble metal (M) to be recovered, the nitric acid concentration is preferably 0.001 mol/L or greater, more preferably 0.01 mol/L or greater, particularly preferably 0.05 mol/L or greater, most preferably 0.1 mol/L or greater, and especially preferably 0.2 mol/L or greater.

The nitric acid concentration in the acidic metal solution is, for example, from 0.001 to 8 wt.%. From the viewpoint of improving recovery efficiency of the noble metal, the lower limit of the nitric acid concentration is preferably 0.03 wt.%, even more preferably 0.05 wt.%, even more preferably 0.1 wt.%, even more preferably 0.2 wt.%, even more preferably 0.3 wt.%, even more preferably 0.5 wt.%, particularly preferably 0.7 wt.%, most preferably 1 wt.%, and especially preferably 1.5 wt.%. From the viewpoint of improving recovery efficiency of the noble metal, the upper limit of the nitric acid concentration is preferably 5 wt.%, particularly preferably 3 wt.%, and most preferably 2.5 wt.%.

From the viewpoints of improving adsorptive interaction and improving the amount of adsorption, the hydrochloric acid concentration in the acidic metal solution is preferably equal to or greater than 30 times by mole, more preferably equal to or greater than 100 times by mole, even more preferably equal to or greater than 150 times by mole, even more preferably equal to or greater than 180 times by mole, even more preferably equal to or greater than 200 times by mole, even more preferably equal to or greater than 300 times by mole, even more preferably equal to or greater than 500 times by mole, even more preferably equal to or greater than 800 times by mole, even more preferably equal to or greater than 1000 times by mole, even more preferably equal to or greater than 1200 times by mole, even more preferably equal to or greater than 1800 times by mole, even more preferably equal to or greater than 2000 times by mole, even more preferably equal to or greater than 3000 times by mole, even more preferably equal to or greater than 4000 times by mole, even more preferably equal to or greater than 5000 times by mole, even more preferably equal to or greater than 8000 times by mole, and even more preferably equal to or greater than 10000 times by mole the concentration of the noble metal ion (Mⁿ⁺), which is the recovery target.

From the viewpoint of durability of the adsorbent material, the hydrochloric acid concentration in the acidic metal solution is preferably equal to or less than 60000 times by mole, more preferably equal to or less than 50000 times by mole, even more preferably equal to or less than 40000 times by mole, particularly preferably equal to or less than 30000 times by mole, most preferably equal to or less than 20000 times by mole, and especially preferably equal to or less than 15000 times by mole the concentration of the noble metal ion (Mⁿ⁺), which is the recovery target.

From the viewpoints of improving adsorptive interaction and improving the amount of adsorption, the hydrochloric acid concentration in the acidic metal solution is preferably 0.001 mol/L or greater, more preferably 0.01 mol/L or greater, even more preferably 0.1 mol/L or greater, particularly preferably 0.3 mol/L or greater, most preferably 0.5 mol/L or greater, and especially preferably 0.8 mol/L or greater.

From the viewpoint of durability of the adsorbent material, the hydrochloric acid concentration in the acidic metal solution is preferably 6 mol/L or less, more preferably 5 mol/L or less, even more preferably 4 mol/L or less, even more preferably 3 mol/L or less, particularly preferably 2.5 mol/L or less, most preferably 2.0 mol/L or less, and especially preferably 1.5 mol/L or less.

The hydrochloric acid concentration in the acidic metal solution is, for example, from 0.001 to 13 wt.%. From the viewpoint of improving recovery efficiency of the noble metal, the lower limit of the hydrochloric acid concentration is preferably 0.05 wt.%, more preferably 0.1 wt.%, even more preferably 0.5 wt.%, even more preferably 1 wt.%, particularly preferably 2 wt.%, most preferably 2.5 wt.%, and especially preferably 3.0 wt.%. From the viewpoint of improving durability of the adsorbent material, the upper limit of the hydrochloric acid concentration is preferably 9 wt.%, more preferably 7 wt.%, even more preferably 5 wt.%, particularly preferably 4 wt.%, and most preferably 3.5 wt.%.

### (Adsorption Step)

The adsorption step involves allowing the adsorbent material (3) to adsorb the noble metal ion in the acidic metal solution by bringing the acidic metal solution prepared by the step described above into contact with the adsorbent material (3).

As the adsorbent material (3), a member having a property of selectively adsorbing the noble metal ion (Mⁿ⁺), which is the recovery target, is preferably selected and used. For example, in a case where the recovery target is a gold ion, the sugar ester described above is preferably used.

The amount of the adsorbent material (3) used is, for example, from 0.1 to 20 g, and preferably from 2 to 10 g, relative to 1 L of the acidic metal solution having a concentration of a noble metal ion (Mⁿ⁺), which is the recovery target, of 100 wt. ppm.

The pH of the acidic metal solution when brought into contact with the adsorbent material (3) is, for example, from 0 to 2.5. From the viewpoint of improving adsorption rate of the noble metal ion (Mⁿ⁺), the upper limit of the pH is preferably 2.0, particularly preferably 1.5, and most preferably 1.

The duration of the contact of the acidic metal solution with the adsorbent material (3) is, for example, 10 minutes or longer, and preferably from 30 minutes to 300 minutes. The solution temperature at the time of the contact of the acidic metal solution with the adsorbent material is, for example, from 5 to 60°C, and preferably from 5 to 30°C.

The method of bringing the adsorbent material (3) into contact with the acidic metal solution is not particularly limited, and the adsorbent material (3) may be immersed in the acidic metal solution, or the acidic metal solution may be circulated in a module including the adsorbent material. For example, in a case where the adsorbent material (3) is a separation membrane, there can be employed a method in which the acidic metal solution is circulated in a module including the separation membrane. In a case where the adsorbent material (3) is a material for filling in column or a material for filling in cartridge, there can be employed a method in which a column or a cartridge is formed by charging the adsorbent material (3) in a container, and the acidic metal solution is circulated in a module including the formed column or cartridge.

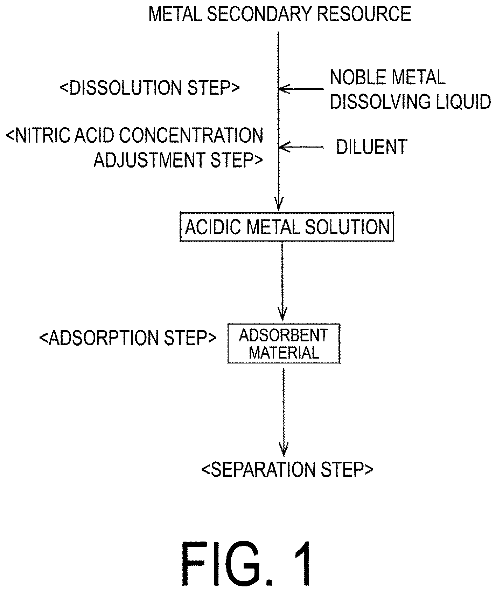

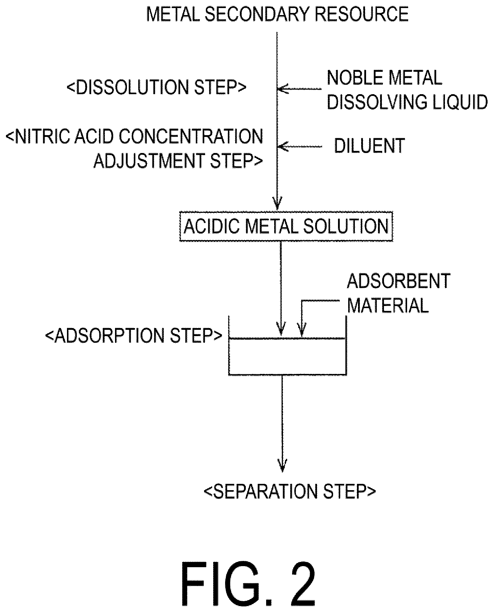

FIG. 1 and FIG. 2 illustrate schematic flow charts of embodiments of the noble metal recovery method.

The noble metal recovery method may include an additional step besides the steps described above, and the method may include, for example, a separation step of separating the noble metal ion (Mⁿ⁺) from the adsorbent material to which the noble metal ion (Mⁿ⁺) is adsorbed.

Examples of the method of separating the noble metal ion (Mⁿ⁺) from the adsorbent material to which the noble metal ion (Mⁿ⁺) is adsorbed include a reduction treatment method and a firing treatment method. In particular, it is preferable to employ a method in which a reducing agent is brought into contact with the adsorbent material to which the noble metal ion (Mⁿ⁺) is adsorbed, to reduce the noble metal ion (Mⁿ⁺) adsorbed to the adsorbent material and detach the noble metal ion (Mⁿ⁺) from the adsorbent material, from the viewpoint of detaching a metal at a low energy consumption.

As the reducing agent, any of the reducing agents exemplified above can be suitably used.

The amount of the reducing agent used is, for example, from 0.1 to 0.5 parts by weight, and preferably from 0.1 to 0.3 parts by weight, relative to 1 part by weight of the adsorbent material (3).

Examples of the method of bringing the reducing agent into contact with the noble metal ion (Mⁿ⁺) adsorbed to the adsorbent material (3) include a method in which the adsorbent material (3) to which the noble metal ion (Mⁿ⁺) is adsorbed is immersed in a solution in which a reducing agent is dissolved; and a method in which the adsorbent material (3) to which the noble metal ion (Mⁿ⁺) is adsorbed is washed using a washing liquid containing no reducing agent to allow the noble metal ion (Mⁿ⁺) to be detached, and then the reducing agent is added to form a colloid of the noble metal ion (Mⁿ⁺), to recover the noble metal ion (Mⁿ⁺). In a case where the adsorbent material (3) is a separation membrane, there can be employed a method in which the separation membrane to which the noble metal ion (Mⁿ⁺) is adsorbed is immersed in a solution in which the reducing agent is dissolved, or a method in which a separation membrane to which the noble metal ion (Mⁿ⁺) is adsorbed is placed in a module, and a solution in which the reducing agent is dissolved is circulated in the module. Furthermore, in a case where the adsorbent material (3) is a material for filling in column or a material for filling in cartridge, there can be employed a method in which a solution in which the reducing agent is dissolved is circulated in a module including a column or cartridge charged with a noble metal ion-adsorbed filler, or a method in which the noble metal ion (Mⁿ⁺) is detached by circulating a washing liquid in the module and then the detached noble metal ion (Mⁿ⁺) is reacted with the reducing agent.

The temperature at the time of contact of the noble metal ion (Mⁿ⁺) adsorbed to the adsorbent material (3) with the reducing agent is, for example, from 80 to 120°C. The contact time is, for example, approximately from 10 minutes to 30 minutes.

The reaction in the separation step can be carried out by any method, such as a batch method, a semi-batch method, or a continuous method. The reaction in the separation step may be performed in a system different from that of the reaction in the previous step or may be performed in the same system.

Through the separation step, a solution containing the noble metal (M) (preferably a colloid formed by dispersion of the noble metal (M) in the solution) is obtained. Then, the noble metal (M) can be recovered by, for example, subjecting the solution containing the noble metal (M) to a method such as centrifugation, ultrafiltration, vaporization, or concentration.

According to the noble metal recovery method, the noble metal ion (Mⁿ⁺) is recovered by allowing the adsorbent material to adsorb the noble metal ion (Mⁿ⁺) from the acidic metal solution containing the noble metal ion (Mⁿ⁺) and having a specific nitric acid concentration. Thus, for example, in a case where the recovery target is gold, when an adsorbent material having a property of selectively adsorbing gold is used, since gold and other metals (e.g., tin, platinum, and palladium) exist in the acidic metal solution in the form of nitrates that are readily dissolved in a solvent, the gold can be easily separated from the other metals by recovering the adsorbent material from the acidic metal solution after the adsorbent material has adsorbed the gold. Therefore, mixing of other metals is suppressed, and highly pure gold can be recovered.

According to the noble metal recovery method, the noble metal (M) (especially, gold) dissolved in the solution can be efficiently recovered in a simple manner. Thus, the noble metal recovery method is particularly preferably a gold recovery method.

### [Noble Metal Recovery Device]

The noble metal recovery device is a device for recovering a noble metal (M) by the noble metal recovery method and includes a unit for allowing the noble metal ion (Mⁿ⁺) to be adsorbed to a member having a property of adsorbing the noble metal ion (Mⁿ⁺) by bringing the member into contact with a solution containing the noble metal ion (Mⁿ⁺), which is the recovery target, and nitric acid and having a nitric acid concentration of equal to or greater than 10 times by mole the concentration of the noble metal ion (Mⁿ⁺) and of less than 1.5 mol/L.

The above-described unit preferably includes a dissolution unit for dissolving a noble metal (M) in a noble metal dissolving liquid (1); a nitric acid concentration adjustment unit for adding a diluent (2) in a solution in which the noble metal (M) is dissolved (= noble metal solution) to adjust the nitric acid concentration in the solution to prepare an acidic metal solution; and an adsorption unit for allowing the noble metal ion (Mⁿ⁺) in the acidic metal solution to be adsorbed to the adsorbent material (3) by bringing the adsorbent material (3) into contact with the acidic metal solution.

The adsorption unit includes a separation membrane made of an adsorbent material having a property of selectively adsorbing the noble metal ion (Mⁿ⁺), a separation membrane including the adsorbent material, a material for filling in column or material for filling in cartridge made of the adsorbent material, a material for filling in column or material for filling in cartridge including the adsorbent material, or a column or cartridge charged with the filler. The adsorption unit may further include a stirring device.

The noble metal recovery device may include an additional unit besides the above-described units. For example, the noble metal recovery device may include a separating unit for separating the adsorbent material (3) to which the noble metal ion is adsorbed from the acidic metal solution, or a recovery unit for recovering the noble metal (M) by subjecting the adsorbent material (3) to which the noble metal ion (Mⁿ⁺) is adsorbed to a reduction treatment.

The recovery unit may include, for example, a reducing agent dropping device, a stirring device, or a reflux device.

The use of the noble metal recovery device enables recovery of the noble metal (especially, gold) contained in a metal secondary resource in a simple and efficient manner. Thus, the noble metal recovery device is particularly preferably a gold recovery device.

The configurations and their combinations of the present disclosure described above are merely examples, and addition, omission, substitution, and modification of the configurations may be appropriately made without departing from the gist of the present disclosure.

### Examples

The present disclosure will next be described in more detail by way of Examples, but the present disclosure is not limited by the Examples and is limited only by the claims.

### Example 1

### (Acidic Metal Solution Preparation)

Aqua regia was three-fold diluted by addition of water as a diluent. To the three-fold diluted aqua regia were added gold(III) chloride (available from Sigma-Aldrich), hydrogen hexachloroplatinate(IV) hexahydrate (Tokyo Chemical Industry Co., Ltd.), iron(III) chloride hexahydrate (available from FUJIFILM Wako Pure Chemical Corporation), and zinc chloride (available from FUJIFILM Wako Pure Chemical Corporation), to prepare an acidic metal solution 1.

Metal ion concentrations in the acidic metal solution 1 (may be referred to as "initial metal ion concentrations") were as follows.
Au ion concentration: 14 ppm
Pt ion concentration: 62 ppm
Fe ion concentration: 18 ppm
Zn ion concentration: 28 ppm

### (Adsorption Test)

To the prepared acidic metal solution 1 (20 mL) was added 40 mg of powdery cellulose acetate (total degree of acetyl group substitution: 2.4; Mw: 190000; Mw/Mn: 2.2) as an adsorbent material, and the mixture was stirred at room temperature for 3 hours.

Thereafter, the powdery cellulose acetate was filtered from the acidic metal solution, and each metal ion amount (may be referred to as "metal ion concentration after adsorption test") in the filtrate was measured by using an ICP optical emission spectrometer (trade name "Agilent 5110", available from Agilent Technologies, Inc.), and the adsorption rate of each metal ion by the powdery cellulose acetate was calculated based on the following equation. The results are shown in Table 1 below. Adsorption rate (%) = [(initial metal ion concentration - metal ion concentration after adsorption test)/initial metal ion concentration] × 100

### Examples 2 to 4

The same procedure as in Example 1 was performed except for changing the amount of the diluent used in the acidic metal solution preparation step.

### Example 5

The same procedure as in Example 2 was performed except for using powdery cellulose acetate propionate (total degree of substitution: 1.98; degree of acyl group substitution: 0.07; Mw: 75000) in place of the powdery cellulose acetate as an adsorbent material in the adsorption test.

### Comparative Examples 1 and 2

The same procedure as in Example 1 was performed except for changing the amount of the diluent used in the acidic metal solution preparation step.

As a result, in the adsorption test, the adsorbent material was dissolved in the acidic metal solution, and the adsorbent material after the adsorption test was not filtered by the filtration treatment.

### Comparative Example 3

Without using aqua regia, gold(III) chloride (available from Sigma-Aldrich), hydrogen hexachloroplatinate(IV) hexahydrate (available from Tokyo Chemical Industry Co., Ltd.), iron(III) chloride hexahydrate (available from FUJIFILM Wako Pure Chemical Corporation), and zinc chloride (available from FUJIFILM Wako Pure Chemical Corporation) were added to water, to prepare an aqueous metal solution (each metal ion concentration was the same as described above).

The adsorption test was performed in the same manner as in Example 1 except for using the aqueous metal solution in place of the acidic metal solution 1.

### [Table 1]

**Table 1**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Acidic metal solution | Nitric acid concentration/M | 0.99 | 0.31 | 0.03 | 0.003 | 0.31 | 3.0 | 1.5 | 0 |
| | Nitric acid concentration/wt.% | 5.8 | 1.9 | 0.17 | 0.020 | 1.9 | 15 | 8.5 | 0 |
| | Hydrochloric acid concentration/M | 3.0 | 0.94 | 0.08 | 0.009 | 0.94 | 9.1 | 4.5 | 0 |
| | Hydrochloric acid concentration/wt.% | 10 | 3.3 | 0.30 | 0.030 | 3.3 | 27 | 15 | 0 |
| | Nitric acid concentration relative to Au ion concentration (times by mole) | 14000 | 4400 | 420 | 42 | 4400 | 42000 | 21000 | - |
| | Hydrochloric acid concentration relative to Au ion concentration (times by mole) | 42000 | 13000 | 1100 | 130 | 13000 | 130000 | 63000 | - |
| | pH of acidic metal solution | < 1 | < 1 | < 1 | 1.7 | < 1 | < 1 | < 1 | 2.6 |
| Adsorption rate (%) | Au | 29 | 55 | 28 | 11 | 4 | Dissolved | Dissolved | 16 |
| | Pt | 0 | 0 | 0 | 0 | 0 | Dissolved | Dissolved | 5 |
| | Fe | 0 | 0 | 0 | 0 | 0 | Dissolved | Dissolved | 35 |
| | Zn | 0 | 0 | 0 | 0 | 0 | Dissolved | Dissolved | 0 |

### Example 6

### (Acidic Metal Solution Preparation)

4.2 mg of a gold wire (diameter: 0.20 mm; purity: 99.95%; available from The Nilaco Corporation) was added to 100 mL of aqua regia and stirred at room temperature for 16 hours to dissolve the gold wire, to prepare a gold solution.

To the prepared gold solution was added 200 mL of water as a diluent. Thus, an acidic metal solution 6 was prepared. The gold ion concentration in the prepared acidic metal solution 6 was 14 ppm. The other metal ion concentration was 0 ppm.

The adsorption test was performed in the same manner as in Example 1 except for using the acidic metal solution 6 in place of the acidic metal solution 1. The results are shown in Table 2 below.

### Comparative Example 4

The same procedure as in Example 6 was performed except for using 100 mL of concentrated hydrochloric acid (available from FUJIFILM Wako Pure Chemical Corporation) in place of 100 mL of aqua regia in the acidic metal solution preparation step. However, the gold wire was not dissolved even after the stirring at room temperature for 16 hours. Thus, the adsorption test was not performed.

### [Table 2]

**Table 2**

| | | Example 6 | Comparative Example 4 |
|---|---|---|---|
| Acidic metal solution | Nitric acid concentration/M | 0.99 | 0.0 |
| | Nitric acid concentration/wt.% | 5.8 | 0 |
| | Hydrochloric acid concentration/M | 3.0 | 11.0 |
| | Hydrochloric acid concentration/wt.% | 10 | 35 |
| | Nitric acid concentration relative to Au ion concentration (times by mole) | 14000 | 0 |
| | Hydrochloric acid concentration relative to Au ion concentration (times by mole) | 42000 | 0 |
| | pH of acidic metal solution | < 1 | < 1 |
| | Au adsorption rate (%) | 29 | - |

As is clear from Table 1 and Table 2 above, in the case where the nitric acid concentration in the acidic metal solution is in the specific range, the gold ion can be selectively and efficiently adsorbed to the sugar ester as an adsorbent material and can be recovered.

Meanwhile, when the nitric acid concentration is excessive, the sugar ester is dissolved, and it is difficult to recover the gold ion by adsorbing the gold ion.

In the aqueous solution containing no nitric acid, metal ions other than the gold ion are crystallized and filtered together with the sugar ester to which the gold ion is adsorbed, and thus it is difficult to recover a highly pure gold.

When the noble metal recovery kit of the present disclosure is used, a noble metal contained in a metal secondary resource can be eluted in a solution and can be selectively recovered.

To summarize the above, configurations and variations of the present disclosure are additionally described below.
[1] A noble metal recovery kit for recovering a noble metal (M), the noble metal recovery kit including a noble metal dissolving liquid, a diluent, and an adsorbent material described below:
   the noble metal dissolving liquid containing hydrochloric acid and nitric acid and having a ratio of hydrochloric acid/nitric acid (molar ratio) of 2 to 6;
   the diluent being a solution for adjusting a nitric acid concentration in a noble metal solution obtained by dissolving a noble metal (M) in the noble metal dissolving liquid to be equal to or greater than 10 times by mole a noble metal ion (Mⁿ⁺) concentration in the noble metal solution and to be less than 1.5 mol/L; and
   the adsorbent material being a member having a property of adsorbing the noble metal ion (Mⁿ⁺).
[2] The noble metal recovery kit according to [1], wherein the noble metal dissolving liquid is aqua regia.
[3] The noble metal recovery kit according to [1] or [2], wherein the adsorbent material is an ester having a sugar skeleton.
[4] The noble metal recovery kit according to [1] or [2], wherein the adsorbent material is a polysaccharide acylate.
[5] The noble metal recovery kit according to any one of [1] to [4], wherein the adsorbent material is a separation membrane, material for filling in column, or material for filling in cartridge including a member having a property of adsorbing the noble metal ion (Mⁿ⁺).
[6] The noble metal recovery kit according to any one of [1] to [5], wherein the noble metal recovery kit recovers a noble metal (M) from a metal secondary resource containing the noble metal (M).
[7] A noble metal recovery method including allowing a noble metal ion (Mⁿ⁺) to be adsorbed to a member having a property of adsorbing the noble metal ion (Mⁿ⁺) by bringing the member into contact with a solution containing the noble metal ion (Mⁿ⁺) and nitric acid and having a nitric acid concentration of equal to or greater than 10 times by mole a concentration of the noble metal ion (Mⁿ⁺) and of less than 1.5 mol/L.
[8] A noble metal recovery method including the following steps:
   step 1: a step of preparing a solution containing a noble metal ion (Mⁿ⁺) by dissolving a noble metal in a noble metal dissolving liquid described below;
   step 2: a step of preparing an acidic metal solution by diluting the solution containing the noble metal ion (Mⁿ⁺) so that a nitric acid concentration in the solution is equal to or greater than 10 times by mole a noble metal ion (Mⁿ⁺) concentration and is less than 1.5 mol/L; and
   step 3: a step of allowing the noble metal ion in the acidic metal solution to be adsorbed to an adsorbent material described below by bringing the acidic metal solution into contact with the adsorbent material, wherein
   the noble metal dissolving liquid contains hydrochloric acid and nitric acid and has a ratio of hydrochloric acid/nitric acid (molar ratio) of 2 to 6; and
   the adsorbent material is a member having a property of adsorbing the noble metal ion (Mⁿ⁺).
[9] A noble metal recovery method including the following steps:
   step 1: a step of preparing a solution containing a noble metal ion (Mⁿ⁺) by dissolving a noble metal (M) in a noble metal dissolving liquid described below;
   step 2: a step of preparing an acidic metal solution by adding a diluent described below to the solution containing the noble metal ion (Mⁿ⁺); and
   step 3: a step of allowing the noble metal ion in the acidic metal solution to be adsorbed to an adsorbent material described below by bringing the acidic metal solution into contact with the adsorbent material, wherein
   the noble metal dissolving liquid contains hydrochloric acid and nitric acid and has a ratio of hydrochloric acid/nitric acid (molar ratio) of 2 to 6;
   the diluent is a solution for adjusting a nitric acid concentration in the noble metal solution obtained by dissolving the noble metal (M) in the noble metal dissolving liquid to be equal to or greater than 10 times by mole a noble metal ion (Mⁿ⁺) concentration in the noble metal solution and to be less than 1.5 mol/L; and
   the adsorbent material is a member having a property of adsorbing the noble metal ion (Mⁿ⁺).
[10] A method for recovering a noble metal from a metal secondary resource containing the noble metal, the method including the following steps:
   step 1: a step of preparing a solution containing a noble metal ion (Mⁿ⁺) by dissolving a metal secondary resource containing a noble metal in a noble metal dissolving liquid described below;
   step 2: a step of preparing an acidic metal solution by diluting the solution containing the noble metal ion (Mⁿ⁺) so that a nitric acid concentration in the solution is equal to or greater than 10 times by mole a noble metal ion (Mⁿ⁺) concentration and is less than 1.5 mol/L; and
   step 3: a step of allowing the noble metal ion in the acidic metal solution to be adsorbed to an adsorbent material described below by bringing the acidic metal solution into contact with the adsorbent material, wherein
   the noble metal dissolving liquid contains hydrochloric acid and nitric acid and has a ratio of hydrochloric acid/nitric acid (molar ratio) of 2 to 6; and
   the adsorbent material is a member having a property of adsorbing the noble metal ion (Mⁿ⁺).
[11] A noble metal recovery device including a unit for allowing a noble metal ion (Mⁿ⁺) to be adsorbed to a member having a property of adsorbing the noble metal ion (Mⁿ⁺) by bringing the member into contact with a solution containing the noble metal ion (Mⁿ⁺) and nitric acid and having a nitric acid concentration of equal to or greater than 10 times by mole a concentration of the noble metal ion (Mⁿ⁺) and of less than 1.5 mol/L.
[12] A noble metal recovery device including:
   a unit for dissolving a noble metal (M) in a noble metal dissolving liquid described below;
   a unit for preparing an acidic metal solution by adding a diluent described below to the solution in which the noble metal (M) is dissolved; and
   a unit for allowing a noble metal ion (Mⁿ⁺) in the acidic metal solution to be adsorbed to an adsorbent material described below by bringing the adsorbent material into contact with the acidic metal solution, wherein
   the noble metal dissolving liquid contains hydrochloric acid and nitric acid and has a ratio of hydrochloric acid/nitric acid (molar ratio) of 2 to 6;
   the diluent is a solution for adjusting a nitric acid concentration in the noble metal solution obtained by dissolving the noble metal (M) in the noble metal dissolving liquid to be equal to or greater than 10 times by mole a noble metal ion (Mⁿ⁺) concentration in the noble metal solution and to be less than 1.5 mol/L; and
   the adsorbent material is a member having a property of adsorbing the noble metal ion (Mⁿ⁺).

### Industrial Applicability

When the noble metal recovery kit of the present disclosure is used, a highly pure noble metal (M) can be recovered from a metal secondary resource by a simple method in an energy-saving manner without use of means requiring a large amount of thermal energy.

## Claims

1. A noble metal recovery kit for recovering a noble metal (M), the noble metal recovery kit comprising a noble metal dissolving liquid, a diluent, and an adsorbent material described below:
the noble metal dissolving liquid containing hydrochloric acid and nitric acid and having a ratio of hydrochloric acid/nitric acid (molar ratio) of 2 to 6;
the diluent being a liquid for diluting a noble metal solution obtained by dissolving a noble metal (M) in the noble metal dissolving liquid and being a solution for adjusting a nitric acid concentration in the noble metal solution to be equal to or greater than 10 times by mole a noble metal ion (Mⁿ⁺) concentration in the noble metal solution and to be less than 1.5 mol/L; and
the adsorbent material being a member having a property of adsorbing the noble metal ion (Mⁿ⁺).

2. The noble metal recovery kit according to claim 1, wherein the noble metal dissolving liquid is aqua regia.

3. The noble metal recovery kit according to claim 1, wherein the adsorbent material is an ester having a sugar skeleton.

4. The noble metal recovery kit according to claim 1, wherein the adsorbent material is a polysaccharide acylate.

5. The noble metal recovery kit according to claim 1, wherein the adsorbent material is a separation membrane, material for filling in column, or material for filling in cartridge including a member having a property of adsorbing the noble metal ion (Mⁿ⁺).

6. The noble metal recovery kit according to any one of claims 1 to 5, wherein the noble metal recovery kit recovers a noble metal (M) from a metal secondary resource containing the noble metal (M).

7. A noble metal recovery method comprising allowing a noble metal ion (Mⁿ⁺) to be adsorbed to a member having a property of adsorbing the noble metal ion (Mⁿ⁺) by bringing the member into contact with a solution containing the noble metal ion (Mⁿ⁺) and nitric acid and having a nitric acid concentration of equal to or greater than 10 times by mole a concentration of the noble metal ion (Mⁿ⁺) and of less than 1.5 mol/L.

8. A noble metal recovery device comprising a unit for allowing a noble metal ion (Mⁿ⁺) to be adsorbed to a member having a property of adsorbing the noble metal ion (Mⁿ⁺) by bringing the member into contact with a solution containing the noble metal ion (Mⁿ⁺) and nitric acid and having a nitric acid concentration of equal to or greater than 10 times by mole a concentration of the noble metal ion (Mⁿ⁺) and of less than 1.5 mol/L.
